# EUROPEAN PATENT APPLICATION

(11) **EP 4 362 587 A1**
(43) Date of publication of application: **01.05.2024**
(21) Application number: 22828040.0
(22) Date of filing: 31.03.2022
(51) Int. Cl.: H04W 72/04, H04W 16/26

(54) **BASE STATION DEVICE, RELAY DEVICE, CONTROL METHOD, AND PROGRAM**

(30) Priority: 22.06.2021 JP 2021103549
(71) Applicant: Canon Kabushiki Kaisha, Tokyo 146-8501 (JP)
(72) Inventor: MAEDA, Yoichi, Tokyo 146-8501 (JP)
(74) Representative: Canon Europe Limited
(86) International application number: PCT/JP2022/016831
(87) International publication number: WO 2022/270121

(57) **Abstract**

Abase station apparatus comprises: determining means for determining a TDD pattern indicating a configuration of uplink communication and downlink communication used when establishing a first access line and communicating with first user equipment using time-division duplex (TDD); notifying means for making a notification of information that enables determination of the TDD pattern determined by the determining means to a relay apparatus that relays communication of the base station apparatus and establishes a second access line and communicates with second user equipment using TDD; and setting means for setting operation of the first access line in accordance with the TDD pattern determined by the determining means after the notifying means makes the notification of the information that enables determination of the TDD pattern.

## Description

### TECHNICAL FIELD

The present invention relates to a base station apparatus, a relay apparatus, a control method, and a program.

### BACKGROUND ART

In 3GPP (3rd Generation Partnership Project), IAB (Integrated Access and Backhaul) is being standardized as a communication technology for backhaul. IAB technology is a technology that uses millimeter wave radio communication such as the 28 GHz band, which is used for access communication between base stations and UE (User Equipment), simultaneously as backhaul communication (PTL 1). Using IAB technology makes it possible to expand area coverage at a lower cost than conventional wired communication using fiber optics or the like, and is therefore expected to be an effective technology for building nextgeneration public networks.

In backhaul communication using IAB technology, a relay apparatus called an IAB node relays communication from an IAB donor, which is a base station apparatus, using millimeter wave communication, and provides communication to user equipment located within a communication range of the IAB node. The IAB nodes for expanding the service area of the IAB donor are controlled through BAP (Backhaul Adaptation Protocol).

Additionally, in 3GPP, the IAB donor and the IAB node provide access communication to the UE using a TDD (Time Division Duplex) method. Here, in fifth-generation (5G) NR (New Radio) TDD communication, the UL/DL ratio of the time slot, the frame configuration, and the like can be flexibly set according to traffic characteristics. For this reason, to implement a variety of use cases that utilize 5G communication, such as low-latency communication and high-speed uplink communication, the TDD pattern can be dynamically changed in the base station in accordance with, for example, the service for providing network slices used by the UE (PTL 2).

### CITATION LIST

### PATENT LITERATURE

PTL 1: Japanese Patent Laid-Open No. 2019-534625
PTL 2: Japanese Patent No. 6285647

### SUMMARY OF INVENTION

### TECHNICAL PROBLEM

Here, if a TDD pattern for transmitting and receiving wireless signals between a base station apparatus and a terminal apparatus is changed in an IAB system, there are situations where that TDD pattern will not match the TDD pattern for transmitting and receiving wireless signals between the relay apparatus and the terminal apparatus. In such cases, there is an issue in that interference will arise between (i) the TDD communication between the base station apparatus and the terminal apparatus and (ii) the TDD communication between the relay apparatus and the other terminal apparatus.

Having been achieved in light of the foregoing issue, it is an object of the present invention to provide a technique for reducing interference between (i) TDD communication between a base station apparatus and a terminal apparatus and (ii) TDD communication between a relay apparatus and another terminal apparatus.

### SOLUTION TO PROBLEM

To solve the above-described problem, a base station apparatus according to the present invention includes: determining means for determining a TDD pattern indicating a configuration of uplink communication and downlink communication used when establishing a first access line and communicating with first user equipment using time-division duplex (TDD); notifying means for making a notification of information that enables determination of the TDD pattern determined by the determining means to a relay apparatus that relays communication of the base station apparatus and establishes a second access line and communicates with second user equipment using TDD; and setting means for setting operation of the first access line in accordance with the TDD pattern determined by the determining means after the notifying means makes the notification of the information that enables determination of the TDD pattern.

### ADVANTAGEOUS EFFECTS OF INVENTION

According to the present invention, a technique can be provided for reducing interference between (i) TDD communication between a base station apparatus and a terminal apparatus and (ii) TDD communication between a relay apparatus and another terminal apparatus.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram illustrating the configuration of a wireless communication system according to embodiments.
FIG. 2 is a hardware block diagram illustrating an IAB node and an IAB donor according to embodiments.
FIG. 3A is a software block diagram illustrating an IAB donor according to embodiments.
FIG. 3B is a software block diagram illustrating an IAB node according to embodiments.
FIG. 4 is a processing sequence chart illustrating a wireless communication system according to a first embodiment.
FIG. 5 is a flowchart illustrating processing executed by the IAB donor according to the first embodiment.
FIG. 6 is a flowchart illustrating processing executed by the IAB node according to the first embodiment.
FIG. 7 is a diagram illustrating a BAP message according to the first embodiment.
FIG. 8 is a processing sequence chart illustrating a wireless communication system according to a second embodiment.
FIG. 9 is a flowchart illustrating processing executed by the IAB donor according to the second embodiment.
FIG. 10 is a flowchart illustrating processing executed by the IAB node according to the second embodiment.
FIG. 11 is a diagram illustrating a BAP message according to the second embodiment.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### First Embodiment

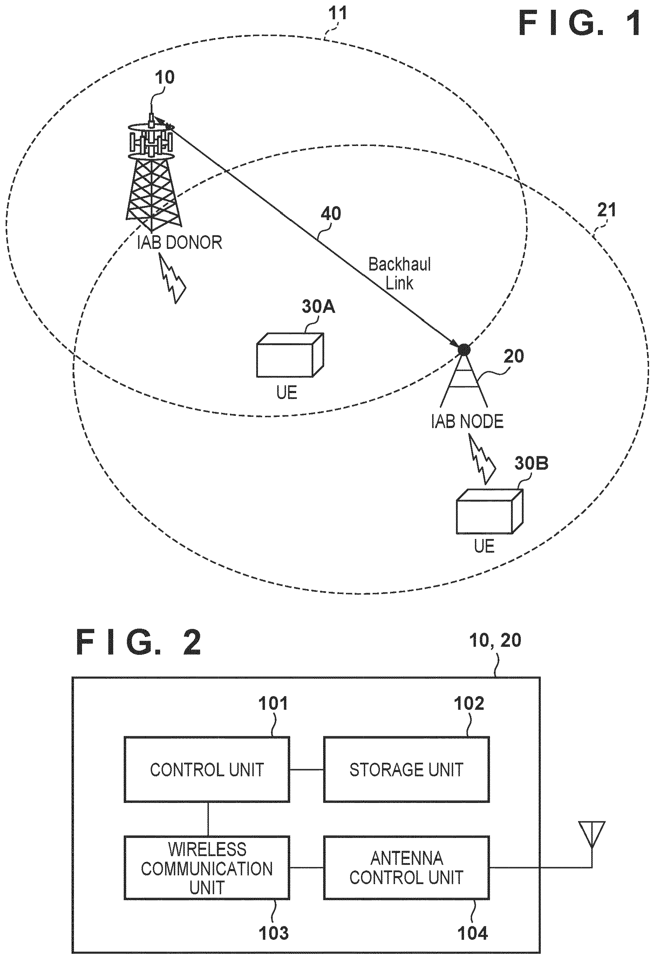

The configuration of a wireless communication network according to the present embodiment will be described with reference to FIG. 1. A wireless communication system 1 according to the present embodiment includes an IAB donor 10, an IAB node 20, and user equipment (UE) 30A and 30B (which may be called UEs 30 without distinction hereinafter).

The IAB donor 10 is a base station apparatus that takes an access area 11 as a communication range, establishes access lines with UEs located within the access area, and provides time-division duplex (TDD) communication. The IAB node 20 is a relay apparatus that takes an access area 21 as a communication range, establishes access lines with UEs located within the access area 21 via backhaul links with the IAB donor 10, and provides time-division duplex (TDD) communication. In the present embodiment, the IAB donor 10 establishes an access line with the UE 30A located within the access area 11. In addition, the IAB donor 10 and the IAB node 20, which are wirelessly connected via a backhaul link 40, establish an access line with the UE 30B located within the access area 21.

Although FIG. 1 illustrates a single IAB donor 10 as controlling a single IAB node 20, a plurality of IAB nodes 20 may be controlled.

Here, with TDD communication in IAB, the UL/DL ratio of the time slot, the frame configuration, and the like can be flexibly set according to traffic characteristics. Accordingly, to implement a variety of use cases, such as low-latency communication and high-speed uplink communication, the base station apparatus is expected to perform operation which dynamically changes the TDD pattern in accordance with, for example, the service for providing network slices used by the UEs.

Here, in FIG. 1, if the IAB donor 10 and the IAB node 20 are performing TDD communication using different TDD patterns, there are situations where, for example, downlink communication from the IAB node 20 is performed during uplink communication from the UE 30Ato the IAB donor 10. In such a case, interference occurs with the other UEs located around the UE 30A, where the access areas 11 and 21 overlap, and the other UEs will be unable to correctly receive the downlink communication from the IAB node 20. In this manner, if the access line is operated in a TDD pattern different from that of the base station apparatus and the relay apparatus having overlapping access areas, interference will arise between the TDD communication operated by the base station apparatus and the TDD communication operated by the relay apparatus. This causes a drop in the communication quality, such as a drop in the effective throughput of the communication system, an increase in communication latency, and the like.

The present embodiment will describe configurations for the IAB donor 10 and the IAB node 20 that prevents the above-described interference from occurring.

An example of the hardware configuration of the IAB donor 10 will be described with reference to FIG. 2. The IAB donor 10 includes a control unit 101, a storage unit 102, a wireless communication unit 103, and an antenna control unit 104. The IAB node 20 is assumed to have a configuration similar to that of the IAB donor 10.

The control unit 101 is a control unit that controls the overall apparatus by executing a control program stored in the storage unit 102, and includes a processor such as a central processing unit (CPU). The storage unit 102 is a storage device in which various information is stored, such as the control program executed by the control unit 101, TDD patterns, connected terminal information, network slice information, IAB routing information, and the like. Various operations (described later) are performed by the control unit 101 executing the control program stored in the storage unit 102. The wireless communication unit 103 is a communication unit including wireless communication circuitry for performing cellular network communication such as LTE, 5G, and the like compliant with the 3GPP standard. The antenna control unit 104 controls an antenna for wireless communication performed by the wireless communication unit 103.

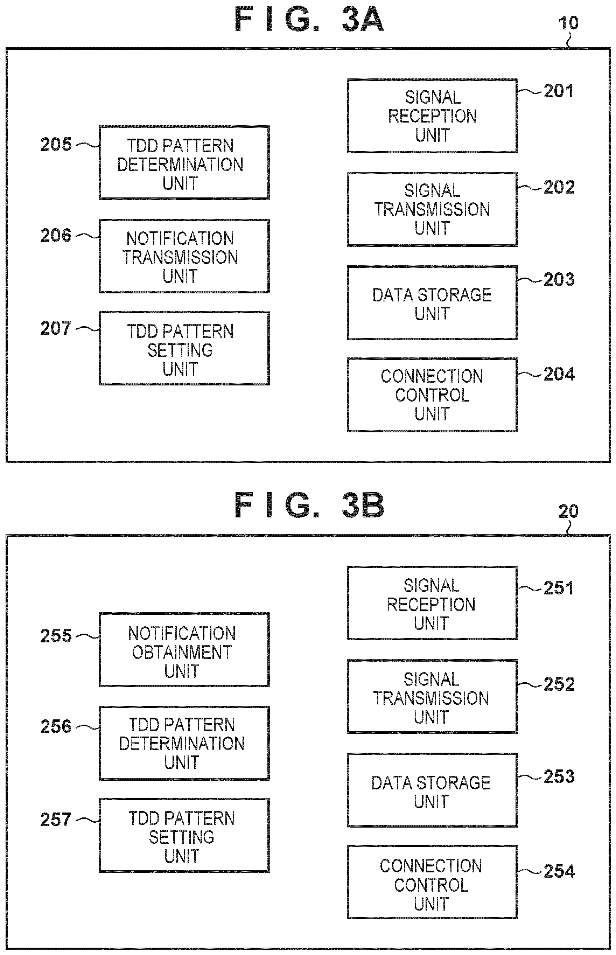

FIG. 3A is a block diagram illustrating the configuration of software function blocks of the IAB donor 10 that executes a communication control function. As described above, the IAB donor 10 realizes the various functions illustrated in FIG. 3A by the control unit 101 executing programs stored in the storage unit 102. The functions of the IAB donor 10 include a signal reception unit 201, a signal transmission unit 202, a data storage unit 203, a connection control unit 204, a TDD pattern determination unit 205, a notification transmission unit 206, and a TDD pattern setting unit 207.

The signal reception unit 201 and the signal transmission unit 202 execute cellular network communication with UEs, such as LTE (Long Term Evolution), 5G, and the like compliant with the 3GPP standard. The data storage unit 203 stores and holds TDD patterns during operation, IAB routing information, information regarding the state of connected UEs, and the like. The connection control unit 204 performs processing pertaining to the connection and disconnection of terminals to the cellular network, such as RRC (Redio Resource Control) message communication, performed between the UEs and a core network function.

The TDD pattern determination unit 205 determines the TDD pattern in the wireless communication performed between the base station apparatus and the terminal based on network slice information received from UEs. For example, if the UE 30 wishes to have a slot pattern that prioritizes lowering latency, a TDD pattern with more data in the uplink (UL) slot can be selected. In this case, the UE can specify the TDD pattern by notifying the IAB donor 10 or the IAB node 20 of information indicating the desired network slice.

The notification transmission unit 206 generates and transmits a BAP message that transmits the TDD pattern determined by the TDD pattern determination unit 205, the timing at which the TDD pattern is to be changed, and the like, which will be described later. Although the present embodiment describes the IAB donor 10 as using a BAP message to transmit information that enables the TDD pattern to be determined on the access line operated by the IAB donor 10, in one example, the notification of the TDD pattern may be made using a system information block (SIB), a master information block (MIB), or the like. The TDD pattern may be a cell-specific uplink (UL)/downlink (DL) TDD pattern, or a UE-specific UL/DL TDD pattern.

The TDD pattern setting unit 207 sets the TDD pattern of the access line operated by the IAB donor based on the TDD pattern in the notification from the notification transmission unit 206.

FIG. 3B is a block diagram illustrating the configuration of software function blocks of the IAB node 20 that executes a communication control function. As described above, the IAB donor 10 realizes the various functions illustrated in FIG. 3B by the control unit 101 executing programs stored in the storage unit 102. The functions of the IAB node 20 include a signal reception unit 251, a signal transmission unit 252, a data storage unit 253, a connection control unit 254, a notification obtainment unit 255, a TDD pattern determination unit 256, and a TDD pattern setting unit 257.

The signal reception unit 251, the signal transmission unit 252, and the data storage unit 253 are similar to the signal reception unit 201, the signal transmission unit 202, and the data storage unit 203 illustrated in FIG. 3A, and will therefore not be described.

The connection control unit 254 relays communication between the UE 30 present in the access area 21, and the IAB donor 10 or the core network, via the backhaul link 40.

The notification obtainment unit 255 obtains a notification, transmitted from the IAB donor 10, that includes information that enables the TDD pattern in the access line operated by the IAB donor 10 to be determined. The TDD pattern determination unit 256 determines whether to switch the TDD pattern, and, if the TDD pattern is to be switched, determines the timing of the switch, based on the TDD pattern notification from the IAB donor 10. The TDD pattern setting unit 257 sets the TDD pattern in the access line operated by the IAB node 20 based on the TDD pattern determined by the TDD pattern determination unit 256.

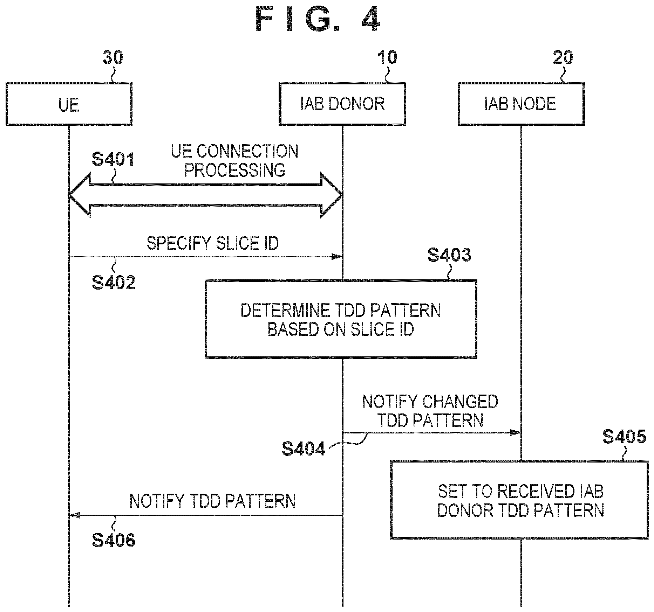

Processing for the notification of the TDD pattern and changing the operation according to the present embodiment will be described next with reference to FIG. 4. After performing connection processing for connecting to the network formed by the IAB donor 10 or the IAB node 20 in S401, the UE 30 transmits the network slice information in S402.

The IAB donor 10 determines a TDD pattern for operation based on the network slice information from the UE 30, and changes the TDD pattern (S403). The IAB donor 10 then notifies the IAB node 20 of the determined TDD pattern (S404).

The IAB node 20 determines the TDD pattern operated by the IAB donor 10 based on the notification from the IAB donor 10, and changes the TDD pattern of the IAB node 20 to the TDD pattern of the IAB donor 10 (S405). The IAB donor 10 notifies the UE 30 of the change in the TDD pattern (S406).

Note that the present embodiment is described assuming that the IAB donor 10 transmits the information, to the IAB node 20, that enables the TDD pattern for operation to be determined using a BAP message, which will be described later. Accordingly, in FIG. 4, the notification of the TDD pattern from the IAB donor 10 to the IAB node 20 in S404 is performed at a different timing than the notification of the TDD pattern from the IAB donor 10 to the UE 30 in S406. However, the information that enables the TDD pattern for operation to be determined may be transmitted to the IAB node 20 by the IAB donor 10 through a broadcast signal, and in such a case, the notifications of S404 and S406 may be made at the same timing.

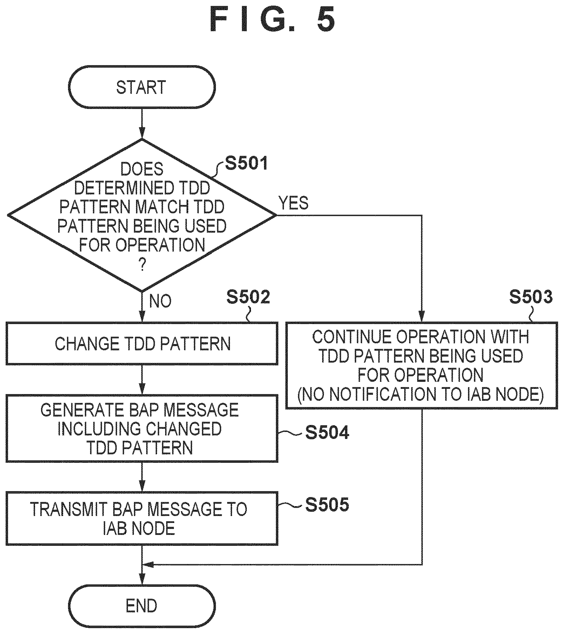

FIG. 5 illustrates processing executed by the IAB donor 10 according to the present embodiment. Although the processing illustrated in FIG. 5 will be described as being executed when the network slice information (a slice ID) is designated by the UE 30, this processing may be executed at any timing, such as when the access line between the IAB donor 10 or the IAB node 20 and the UE 30 is established. The IAB donor 10 may also be set by a network operator so as to change the TDD pattern according to a predetermined rule, such as a time zone, a day of the week, or the like, and the processing illustrated in FIG. 5 can be performed at any time when changing the operation. Furthermore, although the processing illustrated in FIG. 5 is implemented by the control unit 101 of the IAB donor 10 executing a program stored in the storage unit 102, the processing will be described as being executed by the IAB donor 10.

First, in S501, the IAB donor 10 determines whether the TDD pattern determined by the TDD pattern determination unit 205 matches the TDD pattern being used for operation stored in the data storage unit 203, based on the network slice information received from the UE 30 and the like. If the determined TDD pattern and the TDD pattern being used for operation match (yes in S501), the TDD pattern for operation need not be changed. Accordingly, the IAB donor 10 does not notify the IAB node 20 of the TDD pattern, the operation is continued using the TDD pattern being used for the operation, and the processing illustrated in FIG. 5 is ended (S503).

If the determined TDD pattern and the TDD pattern being used for operation do not match (no in S501), the IAB donor 10 operates the access line using the determined TDD pattern (S502).

The IAB donor 10 generates a BAP message including information indicating the TDD pattern changed by the notification transmission unit 206 (S504), and transmits the generated BAP message to the IAB node 20 (S505). Although described later, the BAP message is generated so as to include an identifier that enables the TDD pattern of the access line operated by the IAB donor 10 to be determined.

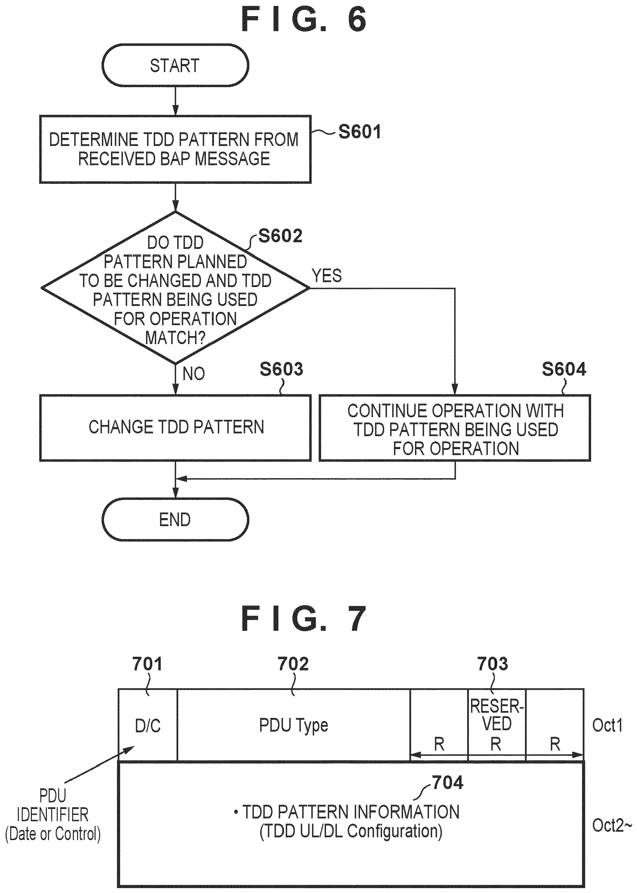

FIG. 7 is a diagram illustrating the configuration of a new BAP message. "Oct1" is a parameter similar to the BAP message according to the 3GPP standard (3GPP TS 38.340 V16.2.0), and parameters including a PDU identifier indicated by 701 (1 bit, indicating a control signal or data), a PDU type indicated by 702 (4 bits, indicating the type of the control information contained in the BAP control PDU), and reserved bits indicated by 703 (3 bits) are set.

Information indicating the TDD pattern of the access line operated by the IAB donor 10 (the TDD pattern information) 704 is stored in a second octet (Oct2) or later of the BAP message as the TDD UL/DL Configuration. The same format as TDD-UL-DL-ConfigCommon contained in the SIB 1 (System Information Block Type 1) of the broadcast information is applied to the information indicating the changed TDD pattern. However, in one example, a unique format in which whether UL communication or DL communication is assigned to each of the wireless slots is indicated by bits may be applied as the information indicating the changed TDD pattern.

Processing executed by the IAB node 20 according to the present embodiment will be described next with reference to FIG. 6. The processing illustrated in FIG. 6 is executed when the IAB node 20 has received a BAP message including TDD pattern information from the IAB donor 10. Furthermore, although the processing illustrated in FIG. 6 is implemented by the control unit 101 of the IAB node 20 executing a program stored in the storage unit 102, the processing will be described as being executed by the IAB node 20.

In S601, the IAB node 20 determines the TDD pattern used for operation by the IAB donor 10 based on the TDD pattern information 704 stored in the BAP message received from the IAB donor 10. The IAB node 20 determines whether the determined TDD pattern matches the TDD pattern used for operation by the IAB node 20 (S602). If the TDD pattern determined from the received BAP message and the TDD pattern being used for operation by the IAB node 20 match (yes in S602), the TDD pattern for operation need not be changed. Accordingly, operation performed using the TDD pattern currently being used for operation is continued (S604), after which the processing illustrated in FIG. 6 ends. If the TDD pattern information 704 and the TDD pattern being used for operation by the IAB node 20 do not match (no in S602), the IAB node 20 changes the TDD pattern of the access line being used for operation according to the TDD pattern information 704 (S603).

As described above, according to the present embodiment, the IAB donor 10 provides a notification of information indicating the TDD pattern of the access line used for operation. Upon receiving the notification, the IAB node 20 changes to the TDD pattern changed by the IAB donor 10. Through this, the TDD patterns operated by the IAB donor 10 and the IAB node 20 can be aligned, making it possible to prevent interference from occurring between the access line operated by the IAB donor 10 and the access line operated by the IAB node 20.

### Second Embodiment

In the first embodiment, the TDD pattern of the access line operated by the IAB donor is set, after which the IAB donor makes a notification of information pertaining to the set TDD pattern. In the present embodiment, before the IAB donor sets the TDD pattern, notifications are made for the TDD pattern planned for operation and information pertaining to the timing of the change in operation. A process by which the IAB node sets the TDD pattern of the access line operated by the IAB node in accordance with the notified TDD pattern at the timing of the change in operation upon receipt of the notification will be described. Note that configurations, functions, and processing that are the same as in the first embodiment will be given the same reference signs, and will not be described.

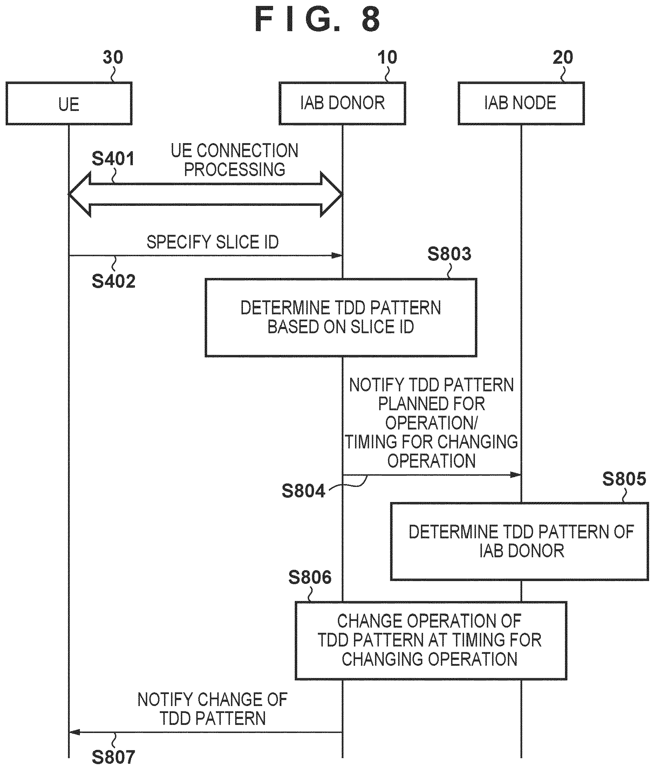

Processing for the notification of the TDD pattern and changing the operation according to the present embodiment will be described with reference to FIG. 8. S401 and S402 have been described with reference to FIG. 4, and will therefore not be described here.

Next, the IAB donor 10, which has obtained the information specifying the slice ID, determines whether to set the TDD pattern of the access line being operated to a different TDD pattern, based on the received slice ID (S803). The IAB donor 10 then notifies the IAB node 20 of the determined TDD pattern planned for operation (S804). Note that in S804, the IAB donor 10 also notifies the IAB node 20 of the timing at which the TDD pattern is changed (the timing at which the operation is changed).

The IAB node 20 determines the TDD pattern that the IAB donor 10 plans to change and the timing of the operation change based on the notification from the IAB donor 10 (S805).

The IAB donor 10 and the IAB node 20 then change the TDD pattern for operation to the TDD pattern planned for operation, at the timing at which the operation is to be changed (S806). The IAB donor 10 broadcasts the changed TDD pattern within the network, e.g., to the UEs 30 and the like (S807).

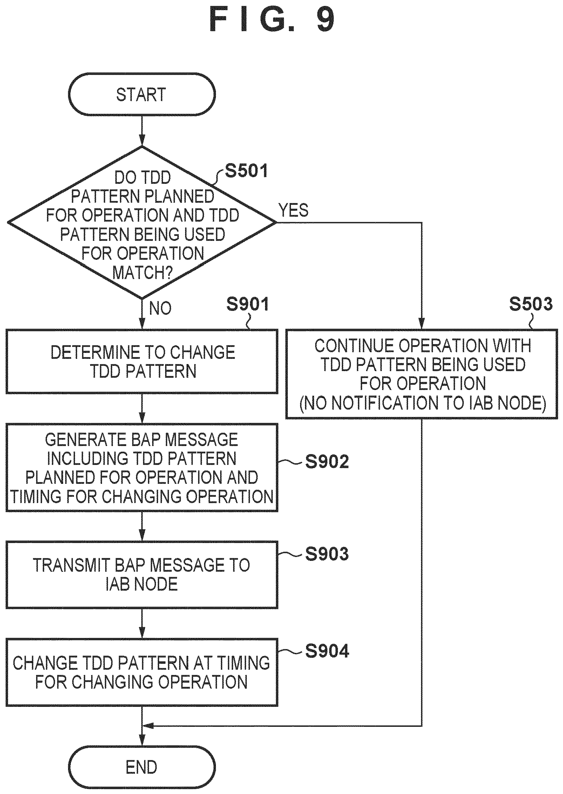

FIG. 9 illustrates processing executed by the IAB donor 10 according to the present embodiment. Like the processing illustrated in FIG. 5, the processing illustrated in FIG. 9 can be executed at any timing.

S501 and S503 have been described with reference to FIG. 5, and will therefore not be described here.

If the TDD pattern planned for operation and the TDD pattern being used for operation do not match (no in S501), the IAB donor 10 moves the processing to S901, and determines to change the TDD pattern (S901). In S901, the IAB donor 10 obtains the identifier of the TDD pattern to be changed, and determines the timing at which the operation is to be changed.

The IAB donor 10 generates a BAP message including information indicating the TDD pattern planned to be changed and information indicating the timing at which the operation is to be changed (S902), and transmits the generated BAP message to the IAB node 20 (S903). Next, in S904, at the timing to change the operation, indicated by the notification, the TDD pattern being used for operation is changed to the TDD pattern planned to be changed, and the processing of FIG. 9 ends.

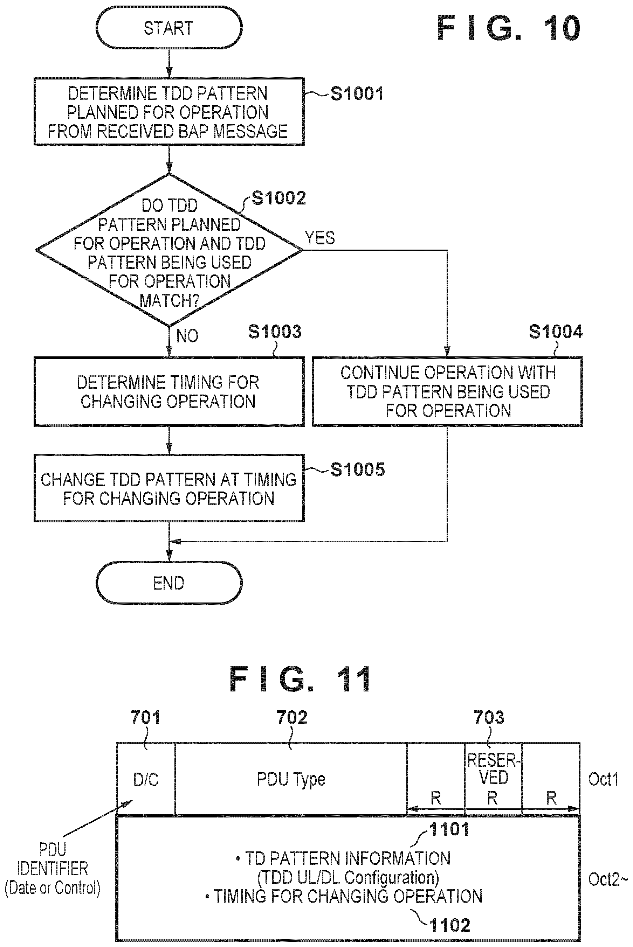

Here, FIG. 11 is a diagram illustrating the configuration of the BAP message. The first octet (Oct1) is the same as in FIG. 7, and will therefore not be described.

Information indicating the TDD pattern planned to be changed (TDD pattern information) 1101 and information indicating the timing at which the operation is to be changed (a timing) 1102 are stored in the second octet (Oct2) or later of the BAP message as the TDD UL/DL Configuration. The same format as the TDD-UL-DL-ConfigCommon included in SIB 1 (System Information Block Type 1) of the broadcast information is applied as the TDD pattern information 1101. However, in one example, a format indicating UL or DL by bits for each slot in a frame may be applied as the TDD pattern information. The timing information 1102 may be information indicating a time on the network, such as a slot number, or information indicating a time interval after receiving the notification and before changing the TDD pattern operation (e.g., 10 ms or the like). Alternatively, the timing information 1102 may be any of bit sequences "00" to "11". In this case, the information may be information indicating a time interval up to a predefined operation change timing, such as four frames in the case of "00", 16 frames in the case of "01", 32 frames in the case of "10", and 64 frames in the case of "11".

Processing executed by the IAB node 20 according to the present embodiment will be described next with reference to FIG. 10. The processing illustrated in FIG. 10 is executed when the IAB node 20 has received a BAP message including TDD pattern information from the IAB donor 10. Furthermore, although the processing illustrated in FIG. 10 is implemented by the control unit 101 of the IAB node 20 executing a program stored in the storage unit 102, the processing will be described as being executed by the IAB node 20.

In S1001, the IAB node 20 determines the TDD pattern planned for operation by the IAB donor 10 based on the TDD pattern information 1101 stored in the BAP message received from the IAB donor 10. The IAB node 20 determines whether the TDD pattern planned for operation by the IAB donor 10 matches the TDD pattern used for operation by the IAB node 20 (S1002). If the TDD pattern planned for operation determined from the received BAP message and the TDD pattern being used for operation by the IAB node 20 match (yes in S1002), the TDD pattern for operation need not be changed. Accordingly, operation performed using the TDD pattern currently being used for operation is continued (S1004), after which the processing illustrated in FIG. 10 ends.

If the TDD pattern planned for operation by the IAB donor 10 and the TDD pattern being used for operation by the IAB node 20 do not match (no in S1002), the IAB node 20 determines the timing to change the operation based on the timing information 1102 (S1003). The IAB node 20 then changes the TDD pattern at the timing to change the operation which has been determined.

As described above, according to the present embodiment, the IAB donor 10 transmits a notification including information indicating the TDD pattern planned for operation and information indicating the timing at which the operation is to be changed to the IAB node 20. Upon receiving the notification, the IAB node 20 changes the TDD pattern for operation to match the timing to the IAB donor 10. This makes it possible to reduce the length of time for which the TDD patterns operated by the IAB donor 10 and the IAB node 20 differ.

### Other Embodiments

The second embodiment described the timing at which the operation is changed as being determined and notified by the IAB donor 10. However, if operations can be changed at the same time, the timing at which the operation is changed may be determined by the IAB node 20. Alternatively, the IAB node 20 may be configured to transmit a response to the notification, and the operation may be changed upon the IAB donor 10 receiving the response to the notification. In this case, changing the operation after the IAB node 20 has also transmitted a response to the notification makes it possible for the TDD patterns for operation by both the IAB donor 10 and the IAB node 20 to be changed at the same time.

The present invention can also be realized as a process executed by supplying a program implementing one or more functions of the above-described embodiments to a system or apparatus over a network or by a storage medium and then causing one or more processors of a computer of the system or apparatus to read out and execute the program. The present invention can also be implemented by a circuit (for example, an ASIC) for implementing one or more functions.

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2021-103549, filed June 22, 2021, which is hereby incorporated by reference herein.

### REFERENCE SIGNS LIST

10 IAB donor
11, 21 Access area
20 IAB node
30A, 30B UE
40 Backhaul link

## Claims

1. Abase station apparatus comprising:
determining means for determining a TDD pattern indicating a configuration of uplink communication and downlink communication used when establishing a first access line and communicating with first user equipment using time-division duplex (TDD);
notifying means for making a notification of information that enables determination of the TDD pattern determined by the determining means to a relay apparatus that relays communication of the base station apparatus and establishes a second access line and communicates with second user equipment using TDD; and
setting means for setting operation of the first access line in accordance with the TDD pattern determined by the determining means after the notifying means makes the notification of the information that enables determination of the TDD pattern.

2. The base station apparatus according to claim 1, wherein the notifying means further makes a notification of information enabling determination of a timing at which the operation of the first access line is to be set by the setting means.

3. The base station apparatus according to claim 1 or 2, wherein the notifying means makes the notification of the information enabling determination of the TDD pattern to the relay apparatus using a Backhaul Adaptation Protocol (BAP) message.

4. The base station apparatus according to any one of claims 1 to 3, wherein the setting means sets the operation of the first access line after the notifying means makes the notification of the information enabling determination of the TDD pattern to the relay apparatus and the base station apparatus has received a response to the notification from the relay apparatus.

5. The base station apparatus according to any one of claims 1 to 4, wherein in a case where slice information designating a network slice is obtained from at least one of the first or second user equipment, the determining means determines the TDD pattern based on the slice information.

6. The base station apparatus according to any one of claims 1 to 5, wherein the notifying means makes the notification of the information enabling determination of the TDD pattern using Integrated Access and Backhaul.

7. The base station apparatus according to claim 6, wherein in a case where a plurality of relay apparatuses are controlled by the base station apparatus, the notifying means makes the notification of the information enabling determination of the TDD pattern to the plurality of relay apparatuses.

8. A relay apparatus that relays communication of a base station apparatus, the relay apparatus comprising:
receiving means for receiving, from the base station apparatus, a notification including information enabling determination of a first TDD pattern indicating a configuration of uplink communication and downlink communication used in a case where the base station apparatus that establishes a first access line and communicates with first user equipment using time-division duplex (TDD);
setting means for setting, based on the information enabling determination of the first TDD pattern received by the receiving means, a second TDD pattern used in a case where the relay apparatus establishes a second access line and communicates with second user equipment using TDD; and
communicating means for communicating with the second user equipment using the second TDD pattern.

9. The relay apparatus according to claim 8, wherein:
the receiving means receives a notification of information enabling determination of a timing at which operation of the first access line is to be set by the base station apparatus, and
the setting means sets operation of the second access line in accordance with the timing received by the receiving means.

10. The relay apparatus according to claim 8 or 9, wherein the receiving means receives the notification transmitted using a Backhaul Adaptation Protocol (BAP) message.

11. The relay apparatus according to any one of claims 8 to 10, further comprising transmitting means for transmitting a response to the notification received by the receiving means,
wherein the setting means sets the operation of the first access line after the transmitting means transmits the response.

12. A control method for a base station apparatus, the control method comprising:
a determining step of determining a TDD pattern indicating a configuration of uplink communication and downlink communication used when establishing a first access line and communicating with first user equipment using time-division duplex (TDD);
a notifying step of making a notification of information that enables determination of the TDD pattern determined in the determining step to a relay apparatus that relays communication of the base station apparatus and establishes a second access line and communicates with second user equipment using TDD; and
a setting step of setting operation of the first access line in accordance with the TDD pattern determined in the determining step after making the notification of the information enabling determination of the TDD pattern in the notifying step.

13. A control method for a relay apparatus that relays communication of a base station apparatus, the control method comprising:
a receiving step of receiving, from the base station apparatus, a notification including information enabling determination of a first TDD pattern indicating a configuration of uplink communication and downlink communication used in a case where the base station apparatus that establishes a first access line and communicates with first user equipment using time-division duplex (TDD);
a setting step of setting, based on the information enabling determination of the first TDD pattern received in the receiving step, a second TDD pattern used in a case where the relay apparatus establishes a second access line and communicates with second user equipment using TDD; and
a communicating step of communicating with the second user equipment using the second TDD pattern.

14. A program that causes a computer to execute the steps of the control method according to claim 12 or 13.
